(19)

Europäisches
Patentamt
European
Patent Office
Office européen
des brevets

(11) **EP 1 807 686 B1**

(12) **EUROPEAN PATENT SPECIFICATION**

(45) Date of publication and mention
of the grant of the patent:
**01.09.2010 Bulletin 2010/35**

(51) Int Cl.:
***G01K 11/32*** *(2006.01)* ***G01M 11/00*** *(2006.01)*

(21) Application number: **04791315.7**

(86) International application number:
**PCT/EP2004/052670**

(22) Date of filing: **27.10.2004**

(87) International publication number:
**WO 2006/045340 (04.05.2006 Gazette 2006/18)**

(54) **OPTICAL TIME DOMAIN REFLECTOMETRY FOR DETERMINING DISTRIBUTED PHYSICAL PROPERTIES**

OPTISCHE ZEITBEREICHSREFLEKTROMETRIE ZUR BESTIMMUNG VERTEILTER PHYSIKALISCHER EIGENSCHAFTEN

REFLECTROMETRIE OPTIQUE A DIMENSION TEMPORELLE POUR DETERMINER LES PROPRIETES PHYSIQUES REPARTIES

(84) Designated Contracting States:
**DE FR GB**

(43) Date of publication of application:
**18.07.2007 Bulletin 2007/29**

(73) Proprietor: **AP Sensing GmbH**
**71034 Böblingen (DE)**

(72) Inventor: **BELLER, Josef**
**72074 Tuebingen (DE)**

(74) Representative: **Dilg, Haeusler, Schindelmann**
**Patentanwaltsgesellschaft mbH**
**Leonrodstraße 58**
**80636 München (DE)**

(56) References cited:
**EP-A- 0 300 529 EP-A- 0 502 283**
**US-A- 4 823 166 US-A- 5 000 568**
**US-A- 5 765 948**

**Description**

BACKGROUND ART

The present invention relates to optical time domain reflectometry (OTDR) for determining a distributed physical property of a device under test (DUT).

The traditional optical time domain reflectometry technique is applied for measuring and locating faults and losses in optical fibers. For that purpose a short optical pulse is coupled into an optical fiber, which starts to travel along the fiber and which is partly scattered due to tiny inhomogeneities in the silica structure. Some of the scattered light travels back to the fiber input. The power of this returning light is measured and put into relation with the elapsed time.

The single pulse OTDR technique as described above is widely applied because of its simplicity and proven performance in telecommunication applications. It is obvious that the energy that can be injected is a function of the amplitude and the pulse width of the incident beam. The power is limited by the availability and cost of appropriate laser devices and the pulse width is limited by the required resolution. With shorter pulses the energy of the probing signal decreases. It is known that conventional OTDR techniques suffer from the well-known trade off between dynamic range and resolution.

US 5,000,568 discloses an optical time domain reflectometer that injects at least two pulse sequences representing so-called complementary codes into an optical fiber and detects the backscattered Rayleigh signals caused by each of these code sequences. These Rayleigh signals are processed to determine the response signal of the fiber by means of correlation. Therewith, it is possible to significantly increase the energy of the incident light and thus to increase the power of the return signal to be analyzed without increasing the amplitude or the width of the pulses.

US 4,283,166 further discloses an OTDR system in which the probing light is amplitude modulated in order to supply the fiber with a coded sequence of pulses (e.g. pseudorandom codes). In US'166 the backscattered signal is filtered (optically), such that only the anti-Stokes wavelength component of the backscattered light is measured.

DISCLOSURE OF THE INVENTION

It is an object of the invention to provide an advanced method for determining a distributed physical property of a DUT. The object is solved by the independent claims. Preferred embodiments are shown by the dependent claims.

Optical reflectometry measurements determine the impulse response of a DUT, i.e. an optical fiber. In order to achieve high spatial resolution, in practice the preferred measurement utilizes probing pulses as short as possible, thus approximating Dirac impulses. Pulses with short time duration however decrease the energy of the probing signal, leading to low-level response signals normally with insufficient signal-to-noise ratio (SNR).

According to the present invention, a distributed physical property of an optical device under test - DUT -, is determined by the method, system and software program or product of claims 1, 6 and 7 respectively. The physical property may be any environmental state along the DUT, e.g. the temperature, strain or displacement.

In contrast to standard OTDR measurements, which determine a physical impulse response of the fiber by measuring the Rayleigh backscatter signal at the same wavelength compared to the incident light pulse, this invention is related to measurements of response signals that occur at wavelengths different to the probing signal. In general, these particular response signals like Raman or Brillouin backscatter have much less power compared to the Rayleigh backscatter signal.

According to the invention, a Dirac impulse or an approximation of a Dirac impulse is created by the correlation of the transmitted (or probing) sequence and the received sequence, preferably obtained by sampling the response signal from the DUT. This correlation product in principle corresponds to the autocorrelation of the transmission sequence convoluted with the impulse response from the DUT. The better the autocorrelation function corresponds to a Dirac impulse, the more the correlation product corresponds to the required DUT impulse response. The advantage of the present invention applying spread spectrum techniques is that it is possible to increase the effective launch power level without affecting the spatial resolution, therewith improving significantly the SNR of the return signal.

Correlation in this context can also be realized by a convolution of the response signal and a system impulse response, where the system can be a FIR (Finite Impulse Response) Filter with coefficients determined from the probing signal.

Both pseudo random codes and complementary codes can be taken as probing sequences to provide the fiber response information. Complementary codes, like Golay codes for example, are pulse sequences, which have the property that the sum of their respective autocorrelation functions are a perfect Dirac pulse. With different wavelengths for probing and for return signals one can evade adverse situations where correlation techniques fail to offer their full advantage. In particular, by avoiding optical reflections, it is possible to invalidate the drawback of finite side lobe suppression with non-ideal measurement equipment.

A fraction of the backscattered light having a different wavelength compared to the incident light, the so-called Raman Anti Stokes light, is subject to the temperature of the DUT. This allows for determining a temperature profile along the DUT by analyzing the first response signal.

A Raman scatter signal taken by reflectometric measurements from an optical fiber as DUT is very well suited for such a correlation technique because of its rather homogeneous character.

In another embodiment of the invention, a second response function at a second response wavelength $\lambda_{R2}$ is separated from the response signal and a second correlation product is calculated by correlating the second response signal and the probing signal. The distributed physical property is determined by relating the first correlation function to the second correlation function, i.e. relating the DUT impulse response at the first response wavelength to the DUT impulse response at the second response wavelength. In other words, information about optical power in different wavelengths ranges is selectively extracted from the optical spectrum of the returning signal and related to each other. This is advantageous, if only one of the impulse responses strongly depends on the distributed physical property, whereas both impulse responses are similar affected by other influences than the physical property distribution (e.g. long term aging, strain or stress).

In a further embodiment for determining the temperature, the first response signal is an Anti-Stokes signal with a center wavelength around a first response wavelength $\lambda_{R1}$ and the second response signal comprises at least one of: a Rayleigh signal with a center wavelength similar to the transmission wavelength $\lambda_T$ and a Stokes signal with a center wavelength around a second response wavelength $\lambda_{R2}$.

In a further embodiment, the first correlation product and the second correlation function are normalized according to the attenuation of the DUT at the specific wavelengths of the response signals. The physical property is determined on the base of a ratio of the normalized first correlation function and the normalized second correlation function.

In a further embodiment, a plurality of complementary code sequences is subsequently transmitted to the DUT and corresponding responses are received. Then the sum of all the correlation products is determined and the distributed physical property is derived on the base of the sum of the correlation products. The use of Golay codes in optical time reflectometry is described in details in US 4,968,800 of the same applicant.

Alternatively to selecting Raman scatter signals, in a further embodiment Brillouin scatter signals are selectively acquired and analyzed. Brillouin signals show both a temperature and strain dependency and lie much closer to the probing wavelength, thus requiring a much narrower transmitter signal spectrum and steeper optical filters.

The invention can be partly or entirely embodied or supported by one or more suitable software programs, which can be stored on or otherwise provided by any kind of data carrier, and which might be executed in or by a data processing unit of an optical time domain reflectometer executing the method described above.

BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

Fig.1 shows an exemplary schematic block diagram of an OTDR setup according to the present invention,

Fig.2 shows a diagram with exemplary spectral distributions of a probing signal and response signals,

Fig.3a shows a diagram with exemplary response signals over the time or location after a correlation,

Fig.3b shows a diagram with normalized response signals of Fig.3a and

Fig.3c shows a diagram with a temperature distribution derived from Fig.3b.

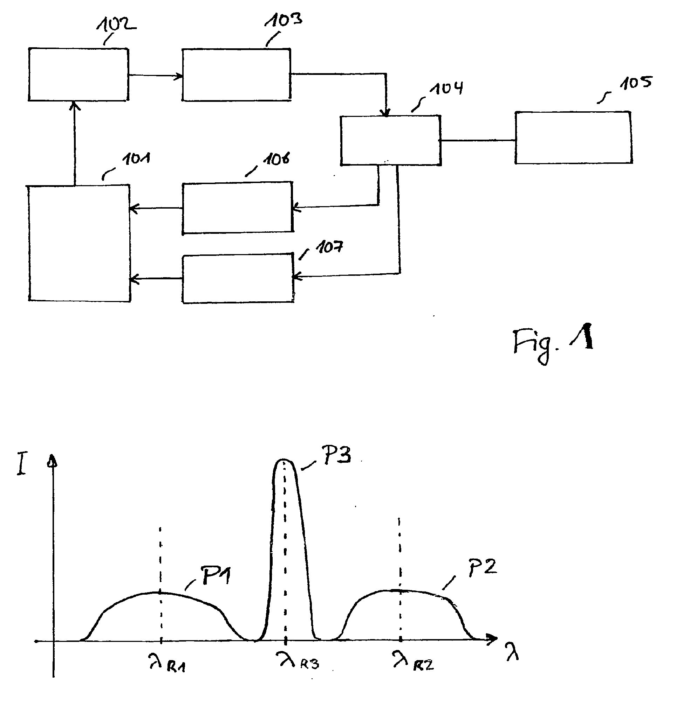

Referring now in greater detail to the drawings, Fig.1 shows an embodiment of an OTDR of the present invention. The OTDR comprises a control unit 101, a light source driver 102, a light source 103, preferably a laser diode with high output power, an optical directional and wavelength selective element 104, further referred to as directional element 104, a DUT 105, preferably realized as optical fiber, a first detector 106 and a second detector 107.

A plurality of digital sequences is stored in a memory (ROM) and fetched by control circuit 101. Control unit 101 provides a control signal to light source driver 102 so that light source driver 102 provides electrical pulses to light source 103 according to a selected digital sequence. The electrical pulses form a determined digital sequence, causing light source 103 to generate a sequence of light pulses in accordance with the sequence of electrical pulses at a transmission wavelength $\lambda_T$.

The sequence of light pulses emitted by light source 103 is injected via directional element 104 that directs the light to an input end of DUT 105. Directional element 104 typically comprises an optical coupler and optical filters. Each launched sequence of light pulses produces a return signal in DUT 105, which is wavelength selectively transported through directional element 104 to first detector 106 or second detector 107.

Instead of passing the two wavelength bands at wavelength $\lambda_1$ and $\lambda_2$ to two receivers at the same time, a sequential measurement process with only one receiver and an additional optical switch is also possible.

Alternatively to selecting the wavelength range within directional element 104, the directional element splits the received light up into the first branch with first detector 106 and the second branch with second detector 107 wherein the selection of the desired wavelength range is each performed by optical filters connected between directional element 104 and each the detectors 106 and 107.

Detectors 106 and 107 each convert the incident light into electrical signals and transmit these electrical signals back to control unit 101. Control unit 101 passes the electrical signals to a processing unit that performs a correlation of each of these signals with the sequence of the corresponding probing signal. As result of these correlations, optical power functions versus time are produced. On the base of these curves a distributed physical property of DUT 105 is derived.

The processing unit can be integrated into control unit 101 or can be realized as separate unit communicating with control unit 101 over a communication interface. Processing of different return signals can be done either in parallel or sequentially in the processing unit.

As sequences for the probing signal digital pseudo random codes or complementary codes can be used. The autocorrelation function of a digital pseudo random code shows a maximum at zero shift and residual side lobes. Thus, neglecting the side lobes, the correlation of a probing signal with a response from DUT 105 represents the impulse answer of DUT 105.

The remaining side lobes in the autocorrelation result limit the usefulness of pseudo random codes. On the contrary, complementary codes, in particular Golay codes, show at least under ideal conditions, no side lobes in the sum of their respective autocorrelation products. Therefore, one ore more pairs of probing signals with complementary codes can be emitted to DUT 105, and the corresponding return signals are each correlated with the corresponding probing signal and the results are added.

Alternatively to providing only one light source 103, it is possible to provide a plurality of light sources each generating a light signal and transmitting digital optical probing signals each at a different transmission wavelength ($\lambda_{T1}$, $\lambda_{T2}$...) directed trough directional element 104 to DUT 105. For each light source a separate light source driver can be provided each receiving a control signal from timing unit 101. It is also possible to provide a plurality of light sources that are all controlled by one light source driver 102.

Fig.2 shows a diagram of spectral distributions of return signals with optical power P over the wavelength $\lambda$. Exemplarily, three peaks P1, P2 and P3 are shown at center wavelengths $\lambda_{R1}$, $\lambda_{R2}$ and $\lambda_{R3}$ (= $\lambda_T$) respectively.

By way of example, third peak P3 represents a so-called Rayleigh backscattering signal, first peak P1 represents a so-called Raman Anti Stokes backscattering signal and second peak P2 represents a so-called Raman Stokes backscattering signal. Whereas the Rayleigh backscattering signal is returning at the same wavelength as the probe signal, the other backscattered signals are returning at different wavelengths. Third peak P3 around first wavelength $\lambda_{R3}$ is relatively high and sharp, whereas first and second peak P1 and P2 around first and second center wavelength $\lambda_{R1}$ and $\lambda_{R2}$ respectively are relatively low and wide compared to third peak P3.

In a possible realization, transmission wavelength $\lambda_T$ (and accordingly third center wavelength $\lambda_{R3}$) is about 1000 nm. The width of third peak P3 is about 10 nm. The suitable ranges of first and second peak P1 and P2 are in the range of 900-980 nm and 1020-1100 nm respectively.

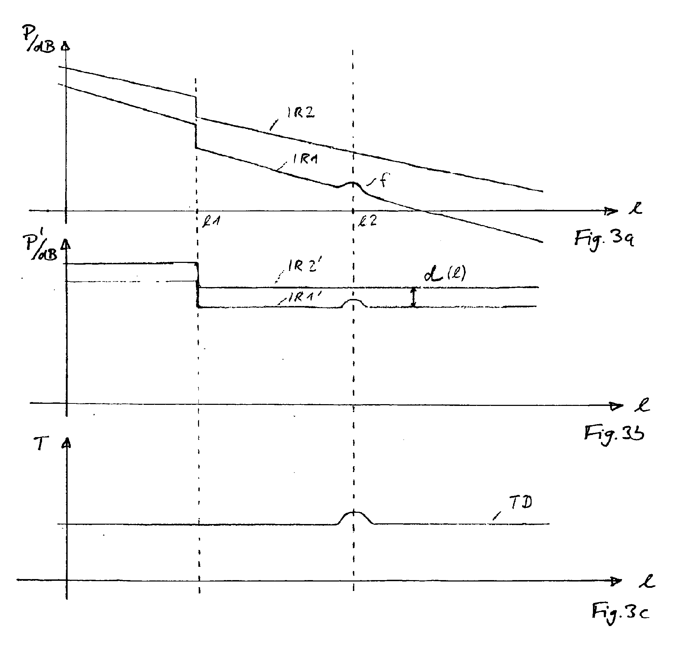

With the following Fig.3a- Fig.3c, a determination of a temperature profile along an optical fiber will be explained.

Fig.3a shows a diagram with exemplary impulse response signals IR1 and IR2 over the time or location as a result of the correlation process. First impulse response signal IR1 and second impulse response signal IR2 represent the signal power depicted logarithmically (in dB) over the length I of the fiber. First impulse response signal IR1, further also referred to as Antistokes signal, represents the power of the Antistokes backscattered signal and second impulse response signal IR2, further also referred to as Stokes signal, represents the power of the Stokes backscattered signal. By way of example, the attenuation of the Antistokes signal is greater that the attenuation of the Stokes signal. The attenuation of each of the both signals in the optical fiber depends on each the wavelength of the signals and is mainly specific to the material of the optical fiber (e.g. glass). The optical fiber is of homogeneous material and geometry. In the example shown, a splice is located at length I1.

By way of example, the ambient temperature of the optical fiber is assumed to be constant, except at a second location I2, where a local temperature increase is assumed. As mainly the Anti-Stokes signal IR1 is affected by the ambient fiber temperature, the Stokes signal IR2 remains almost linear at this location whereas the Antistokes signal shows a peak f at this location.

By timing the arrival of the return signal, the optical power, or generally the physical property, can be depicted on a distance scale using the speed of light in the DUT as conversion factor

Fig.3.b shows a diagram, wherein the impulse response signals of Fig.3a are normalized according to the fiber attenuation at each response wavelength $\lambda_{R1}$ and $\lambda_{R2}$ respectively, i.e. the first normalized impulse response signal IR1' corresponds to first impulse response signal IR1 multiplied with a first linear function over the length I, wherein the slope corresponds to the attenuation at the first response wavelength $\lambda_{R1}$, and the second normalized impulse response signal IR2' corresponds to second impulse response signal IR2 multiplied with a second linear function over the length I, wherein the slope corresponds to the attenuation at the second response wavelength $\lambda_{R2}$.

EP 1 807 686 B1

The ratio of the signal power of the normalized impulse response signals can be written as follows:
$$P_{stokes}/P_{antistokes} = e^{-h \cdot \Delta v / k \cdot T},$$

with
h being the Planck constant, $\Delta v = c(1/\lambda_T - 1/(\lambda_T - \Delta\lambda))$ with c being the light speed, k being the Boltzmann constant, and T being the temperature.
After taking the natural logarithm of both sides, the following result is obtained:
$$\log (P_{stokes}/P_{antistokes}) = \log (P_{stokes}) - \log (P_{antistokes}) = -h \cdot \Delta v / k \cdot T$$

Thus, the log difference d(l) between first normalized impulse response signal IR1' and second normalized impulse response signal IR2' is proportional to the inverse of the temperature at the location l ($\sim 1/T(l)$). The attenuation of the fiber can be derived from a data sheet depicting the fiber attenuation over wavelength or can be directly measured or taken from the diagram in Fig.3.a.
Alternatively to relating the Stokes signal and the Antistokes signal to each other, the Antistokes signal is referenced to the Rayleigh backscattered signal with a center wavelength similar to the transmission wavelength $\lambda_T$ or to the sum of the Rayleigh backscattered signal and the Stokes signal or any signal except the Stokes signal alone. Relating the Antistokes signal to (at least a spectral fraction of) the sum of the Rayleigh backscattered signal and the Stokes signal or any signal except the Stokes signal itself has the advantage that a corresponding filter can be realized simpler or that only the Stokes signal IR1 needs to be filtered out and the rest of the spectral band can be taken as second impulse response signal IR2.
Fig.3.c shows a diagram with a temperature distribution curve TD derived from Fig.3b as a function of the temperature T over the fiber length l. As in Fig.3.b the difference d(l) between the normalized impulse response signals is proportional to the inverse of the temperature, curve TD shown here is a function of the inverse of the difference d(l).
Therewith, an optical fiber can be used as temperature sensing element. Using an optical fiber as sensing element is especially interesting under harsh environmental conditions because the optical fiber can be made very temperature robust. Further, there is no inherent spatial limitation for the temperature distribution imposed by the sensing fiber.
Alternatively, the physical property can be strain, pressure or humidity in the ambience of DUT 105.
For determining the distributed strain, instead of evaluation the Stokes/Antistokes backscattering signals, the so-called Brillouin backscattered light is selected (filtered) and evaluated. However, this would mean more stringent restrictions for the light source and the optical filters.

**Claims**

1. A method of measuring a distributed physical property (TD) of an optical device under test - DUT, comprising the steps of:

   - launching a probing signal (ST) comprising a sequence of optical pulses at a transmission wavelength ($\lambda_T$) into the DUT, the probing signal (ST) comprising a plurality of different probing sequences, which are a plurality of complementary codes,
   - receiving an optical response returning from the DUT, and
   separating a first response signal (SR1) at a first response wavelength range ($\lambda_{R1}$), the first response signal (SR1) comprising a plurality of corresponding partial response signals corresponding to the different probing sequences, wherein the first response wavelength range ($\lambda R_1$) does not comprise the transmission wavelength ($\lambda_T$), and
   separating a second response function (SR2) at a second response wavelength range ($\lambda_{R2}$), the second re-

sponse signal (SR2) comprising a plurality of corresponding partial response signals,
- determining a plurality of first correlation functions (IR1) by correlating each partial response signal of the first response signal (SR1) with the corresponding probing sequence,
- determining a plurality of second correlation functions (IR2) by correlating each partial response signal of the second response signal (SR2) with the corresponding probing sequence, and
- determining the distributed physical property (TD) on the base of said sum of said first correlation functions (IR1) and the sum of said second correlation functions (IR2),

wherein the first response signal (SR1) is an Antistokes signal with a center wavelength at the first response wavelength range ($\lambda_{R1}$) and the second response signal (SR2) is a Stokes signal with a center wavelength at the second response wavelength ($\lambda_{R2}$).

2. The method of claim 1, wherein the first response signal (SR1) is depending on the temperature distribution along the DUT and wherein the distributed physical property (TO) is a temperature profile.

3. The method of claim 1 or anyone of the above claims, wherein a distribution over at least a part of the length of the DUT of the distributed physical property (TD) is derived by changing a dependency over the time of the correlation function (IR1, IR2) to a function with a dependency over the location along the propagation direction of the probing signal (ST) by means of the light propagation speed in the DUT.

4. The method of claim 3, wherein the first correlation function over the location (IR1) and the correlation function (IR2) are normalized according to the attenuation of the DUT at the specific wavelength and wherein the physical property is determined on the base of a ratio of the normalized first correlation function (IR1') and the normalized second correlation function (IR2').

5. The method of claim 1, or anyone of the above claims, wherein at least one additional probing signal is emitted at a wavelength different to the wavelength ($\lambda_{T1}$) of the probing signal (S1).

6. A system of measuring a distributed physical property (TD) of an optical device under test - DUT, comprising:

- a transmitter (102, 103) adapted to launch a probing signal (ST) comprising a sequence of optical pulses at a transmission wavelength ($\lambda_T$) into the DUT, the probing signal (ST) comprising a plurality of different probing sequences, which are a plurality of complementary codes,
- a receiver (104, 106, 107) adapted for receiving an optical response returning from the DUT, and separating a first response signal (SR1) at a first response wavelength range ($\lambda_{R1}$), the first response signal (SR1) comprising a plurality of corresponding partial response signals corresponding to the probing sequences, wherein the first response wavelength range ($\lambda_{R1}$) does not comprise the transmission wavelength ($\lambda_T$), and separating a second response function (SR2) at a second response wavelength range ($\lambda_{R2}$), the second response signal (SR2) comprising a plurality of corresponding partial response signals,
- a control unit (101) adapted for
determining a plurality of first correlation functions (IR1) by correlating each partial response signal of the first response signal (SR1) with the corresponding probing sequence,
determining a plurality of second correlation functions (IR2) by correlating each partial response signal of the second response signal (SR2) with the corresponding probing sequence, and
determining the distributed physical property (TD) on the base of said sum of said first correlation functions (IR1) and the sum of said second correlation functions (IR2),

wherein the first response signal (SR1) is an Antistokes signal with a center wavelength at the first response wavelength range ($\lambda_{R1}$) and the second response signal (SR2) is a Stokes signal with a center wavelength at the second response wavelength ($\lambda_{R2}$).

7. A software program or product, preferably stored on a data carrier of a control unit (101), for executing the steps of method claim 1 or anyone of claims 2-5.

**Patentansprüche**

1. Ein Verfahren zum Messen einer verteilten physikalischen Eigenschaft (TD) eines optischen Messobjekts - DUT, aufweisend die Schritte:

Losschicken eines Prüfsignals (ST), welches eine Sequenz von optischen Pulsen bei einer Transmissionswellenlänge ($\lambda_T$) aufweist, in das DUT, wobei das Prüfsignal (ST) eine Mehrzahl von verschiedenen Prüfsequenzen aufweist, welche eine Mehrzahl von komplementären Codes sind,
Empfangen einer optischen Antwort, welche von dem DUT zurückkommt, und
Separieren eines ersten Antwortsignals (SR1) bei einem ersten Antwortwellenlängenbereich ($\lambda_{R1}$), wobei das erste Antwortsignal (SR1) eine Mehrzahl von korrespondierenden partiellen Antwortsignalen aufweist, die zu verschiedenen Prüfsequenzen korrespondieren, wobei der erste Antwortwellenlängenbereich ($\lambda_{R1}$) nicht die Transmissionswellenlänge ($\lambda_T$) aufweist, und
Separieren eines zweiten Antwortsignals (SR2) bei einem zweiten Antwortwellenlängenbereich ($\lambda_{R2}$), wobei das zweite Antwortsignal (SR2) eine Mehrzahl von korrespondierenden partiellen Antwortsignalen aufweist,
Bestimmen einer Mehrzahl von ersten Korrelationsfunktionen (IR1) durch ein Korrelieren jedes partiellen Antwortsignals des ersten Antwortsignals (SR1) mit der korrespondierenden Prüfsequenz,
Bestimmen einer Mehrzahl von zweiten Korrelationsfunktionen (IR2) durch ein Korrelieren jedes partiellen Antwortsignals des zweiten Antwortsignals (SR2) mit der korrespondierenden Prüfsequenz, und
Bestimmen der verteilten physikalischen Eigenschaft (TD) auf der Basis der Summe der ersten Korrelationsfunktionen (IR1) und der Summe der zweiten Korrelationsfunktionen (IR2),
wobei das erste Antwortsignal (SR1) ein Antistokes-Signal mit einer Mittenwellenlänge in dem ersten Antwortwellenlängenbereich ($\lambda_{R1}$) und das zweite Antwortsignals (SR2) ein Stokes-Signal mit einer Mittenwellenlänge in dem zweiten Antwortwellenlängenbereich ($\lambda_{R2}$) ist.

2. Das Verfahren gemäß Anspruch 1, wobei
das erste Antwortsignal (SR1) von der Temperaturverteilung entlang des DUT abhängt und wobei
die verteilte physikalische Eigenschaft (TD) ein Temperaturprofil ist.

3. Das Verfahren gemäß Anspruch 1 oder dem vorstehenden Anspruch, wobei eine Verteilung über zumindest einem Teil der Länge des DUT der verteilten physikalischen Eigenschaft (TD) abgeleitet wird durch ein Wechseln einer Abhängigkeit der Korrelationsfunktionen (IR1, IR2) von der Zeit zu einer Funktion mit einer Abhängigkeit von dem Ort entlang der Fortpflanzungsrichtung des Prüfsignals (ST) unter Verwendung der Geschwindigkeit der Lichtfortpflanzung in dem DUT.

4. Das Verfahren gemäß Anspruch 3, wobei
die erste Korrelationsfunktion über dem Ort (IR1) und die Korrelationsfunktion (IR2) normalisiert sind entsprechend der Dämpfung des DUT bei der spezifischen Wellenlänge und wobei
die physikalische Eigenschaft bestimmt wird auf der Basis des Verhältnisses der normalisierten ersten Korrelationsfunktion (IR1') und der normalisierten zweiten Korrelationsfunktion (IR2').

5. Das Verfahren gemäß Anspruch 1 oder irgend einem der vorstehenden Ansprüche, wobei
zumindest ein zusätzliches Prüfsignal bei einer Wellenlänge emittiert wird, welche unterschiedlich zu der Wellenlänge ($\lambda_{T1}$) des Prüfsignals (S1) ist.

6. Ein System zu Messen einer verteilten physikalischen Eigenschaft (TD) eines optischen Messobjekts - DUT, aufweisend:

einen Sender (102, 103), eingerichtet zum Losschicken eines Prüfsignals (ST), welches eine Sequenz von optischen Pulsen bei einer Transmissionswellenlänge ($\lambda_T$) aufweist, in das DUT, wobei das Prüfsignal (ST) eine Mehrzahl von verschiedenen Prüfsequenzen aufweist, welche eine Mehrzahl von komplementären Codes sind,
einen Empfänger (104, 106, 107), eingerichtet zum Empfangen einer optischen Antwort, welche von dem DUT zurückkommt, und Separieren eines ersten Antwortsignals (SR1) bei einem ersten Antwortwellenlängenbereich ($\lambda_{R1}$), wobei das erste Antwortsignal (SR1) eine Mehrzahl von korrespondierenden partiellen Antwortsignalen aufweist, die zu verschiedenen Prüfsequenzen korrespondieren, wobei der erste Antwortwellenlängenbereich ($\lambda_{R1}$) nicht die Transmissionswellenlänge ($\lambda_T$) aufweist, und Separieren eines zweiten Antwortsignals (SR2) bei einem zweiten Antwortwellenlängenbereich ($\lambda_{R2}$), wobei das zweite Antwortsignal (SR2) eine Mehrzahl von korrespondierenden partiellen Antwortsignalen aufweist,
eine Steuereinheit (101), eingerichtet zum Bestimmen einer Mehrzahl von ersten Korrelationsfunktionen (IR1) durch ein Korrelieren jedes partiellen Antwortsignals des ersten Antwortsignals (SR1) mit der korrespondierenden Prüfsequenz,

Bestimmen einer Mehrzahl von zweiten Korrelationsfunktionen (IR2) durch ein Korrelieren jedes partiellen Antwortsignals des zweiten Antwortsignals (SR2) mit der korrespondierenden Prüfsequenz, und

Bestimmen der verteilten physikalischen Eigenschaft (TD) auf der Basis der Summe der ersten Korrelationsfunktionen (IR1) und der Summe der zweiten Korrelationsfunktionen (IR2),

wobei das erste Antwortsignal (SR1) ein Antistokes-Signal mit einer Mittenwellenlänge in dem ersten Antwortwellenlängenbereich ($\lambda_{R1}$) und das zweite Antwortsignals (SR2) ein Stokes-Signal mit einer Mittenwellenlänge in dem zweiten Antwortwellenlängenbereich ($\lambda_{R2}$) ist.

7. Ein Software-Programm oder -Produkt, bevorzugt gespeichert auf einem Datenträger einer Steuereinheit (101), zum Ausführen der Schritte des Verfahrensanspruchs 1 oder von irgendeinem der Ansprüche 2 bis 5.

## Revendications

1. Procédé de mesure d'une propriété physique distribuée (TD) d'un dispositif optique à l'essai - DUT, comprenant les étapes consistant à :

   - lancer un signal d'essai (ST) comprenant une séquence d'impulsions optiques à une longueur d'onde de transmission ($\lambda_T$) dans le DUT, le signal d'essai (ST) comprenant une pluralité de séquences d'essai différentes, qui sont une pluralité de codes complémentaires,
   - recevoir une réponse optique revenant du DUT, et

   séparer un signal de première réponse (SR1) à une plage de longueur d'onde de première réponse ($\lambda_{R1}$), le signal de première réponse (SR1) comprenant une pluralité de signaux de réponse partielle correspondants correspondant aux séquences d'essai différentes, dans lequel la plage de longueur d'onde de première réponse ($\lambda_{R1}$) ne comprend pas la longueur d'onde de transmission ($\lambda_T$), et

   séparer une fonction de seconde réponse (SR2) à une plage de longueur d'onde de seconde réponse ($\lambda_{R2}$), le signal de seconde réponse (SR2) comprenant une pluralité de signaux de réponse partielle correspondants,
   - déterminer une pluralité de premières fonctions de corrélation (IR1) en corrélant chaque signal de réponse partielle du signal de première réponse (SR1) avec la séquence d'essai correspondante,
   - déterminer une pluralité de secondes fonctions de corrélation (IR2) en corrélant chaque signal de réponse partielle du signal de seconde réponse (SR2) avec la séquence d'essai correspondante, et
   - déterminer la propriété physique distribuée (TD) sur la base de ladite somme desdites premières fonctions de corrélation (IR1) et la somme desdites secondes fonctions de corrélation (IR2),

   dans lequel le signal de première réponse (SR1) est un signal anti-Stokes avec une longueur d'onde centrale à la plage de longueur d'onde de première réponse ($\lambda_{R1}$) et le signal de seconde réponse (SR2) est un signal Stokes avec une longueur d'onde centrale à la longueur d'onde de seconde réponse ($\lambda_{R2}$).

2. Procédé selon la revendication 1, dans lequel le signal de première réponse (SR1) dépend de la distribution de température le long du DUT et dans lequel la propriété physique distribuée (TO) est un profil de température.

3. Procédé selon la revendication 1 ou une quelconque des revendications précédentes, dans lequel une distribution sur au moins une partie de la longueur du DUT de la propriété physique distribuée (TD) est dérivée en changeant une dépendance du temps de la fonction de corrélation (IR1, IR2) en une fonction avec une dépendance de la localisation le long de la direction de propagation du signal d'essai (ST) au moyen de la vitesse de propagation de lumière dans le DUT.

4. Procédé selon la revendication 3, dans lequel la première fonction de corrélation sur la localisation (IR1) et la fonction de corrélation (IR2) sont normalisées selon l'atténuation du DUT à la longueur d'onde spécifique et dans lequel la propriété physique est déterminée sur la base d'un rapport de la première fonction de corrélation normalisée (IR1') et la seconde fonction de corrélation normalisée (IR2').

5. Procédé selon la revendication 1, ou une quelconque des revendications précédentes, dans lequel au moins un signal d'essai supplémentaire est émis à une longueur d'onde différente de la longueur d'onde ($\lambda_{T1}$) du signal d'essai (S1).

6. Système de mesure d'une propriété physique distribuée (TD) d'un dispositif optique à l'essai - DUT, comprenant :

- un transmetteur (102, 103) adapté pour lancer un signal d'essai (ST) comprenant une séquence d'impulsions optiques à une longueur d'onde de transmission ($\lambda_T$) dans le DUT, le signal d'essai (ST) comprenant une pluralité de séquences d'essai différentes, qui sont une pluralité de codes complémentaires,

- un récepteur (104, 106, 107) adapté pour recevoir une réponse optique revenant du DUT, et

séparer un signal de première réponse (SR1) à une plage de longueur d'onde de première réponse ($\lambda_{R1}$), le signal de première réponse (SR1) comprenant une pluralité de signaux de réponse partielle correspondants correspondant aux séquences d'essai, dans lequel la plage de longueur d'onde de première réponse ($\lambda_{R1}$) ne comprend pas la longueur d'onde de transmission ($\lambda_T$), et

séparer une fonction de seconde réponse (SR2) à une plage de longueur d'onde de seconde réponse ($\lambda_{R2}$), le signal de seconde réponse (SR2) comprenant une pluralité de signaux de réponse partielle correspondants,

- une unité de commande (101) adaptée pour

déterminer une pluralité de premières fonctions de corrélation (IR1) en corrélant chaque signal de réponse partielle du signal de première réponse (SR1) avec la séquence d'essai correspondante,

déterminer une pluralité de secondes fonctions de corrélation (IR2) en corrélant chaque signal de réponse partielle du signal de seconde réponse (SR2) avec la séquence d'essai correspondante, et

déterminer la propriété physique distribuée (TD) sur la base de ladite somme desdites premières fonctions de corrélation (IR1) et la somme desdites secondes fonctions de corrélation (IR2),

dans lequel le signal de première réponse (SR1) est un signal anti-Stokes avec une longueur d'onde centrale à la plage de longueur d'onde de première réponse ($\lambda_{R1}$) et le signal de seconde réponse (SR2) est un signal Stokes avec une longueur d'onde centrale à la longueur d'onde de seconde réponse ($\lambda_{R2}$).

7. Programme ou produit informatique, de préférence stocké sur un support de données d'une unité de commande (101), pour exécuter les étapes de la revendication 1 ou une quelconque des revendications 2 à 5.

Fig. 1

$P/_{dB}$

IR2

IR1

f

$\ell_1$     $\ell_2$     $\ell$

Fig. 3a

$P'/_{dB}$

IR2'

$\alpha(\ell)$

IR1'

$\ell$

Fig. 3b

T

TD

$\ell$

Fig. 3c

**REFERENCES CITED IN THE DESCRIPTION**

**Patent documents cited in the description**

- US 5000568 A
- US 4283166 A
- US 4968800 A